# EUROPÄISCHE PATENTSCHRIFT

(11) **EP 1 010 911 B1**
(45) Veröffentlichungstag und Bekanntmachung des Hinweises auf die Patenterteilung: **01.02.2006**
(21) Anmeldenummer: 99121821.5
(22) Anmeldetag: 04.11.1999
(51) Int. Cl.: F16D 27/00, F16D 23/12

(54) **Stelleinrichtung für eine trennbare Reibungskupplung eines Kraftfahrzeugs**
Actuator for a friction clutch of a motor vehicle
Dispositif de positionnement pour un embrayage à friction d'un véhicule automobile

(30) Priorität: 17.12.1998 DE 19858246
(43) Veröffentlichungstag der Anmeldung: 21.06.2000
(73) Patentinhaber: Bayerische Motoren Werke Aktiengesellschaft, 80809 München (DE)
(72) Erfinder: Winkam, Gamjad, 85406 Zolling (DE); Biskup, Ernst, 82224 Eichenau (DE)

(56) Entgegenhaltungen:
- EP-A- 0 716 242
- US-A- 4 648 498
- US-A- 5 353 902
- US-A- 5 588 517

## Beschreibung

Die Erfindung bezieht sich auf eine Stelleinrichtung für eine trennbare Reibungskupplung gemäß dem Oberbegriff des Patentanspruchs 1.

Eine derartige Stelleinrichtung ist aus der US 4 648 498 bekannt.

Es ist bereits bekannt, eine Reibungskupplung eines Kraftfahrzeugs automatisch zu trennen. Dazu wird eine manuell, zum Beispiel über ein Kupplungspedal durch einen Fahrer, betätigbare Stelleinrichtung ersetzt durch eine Stelleinrichtung, deren Stellantrieb zum Beispiel durch einen Elektromotor bewerkstelligt wird. Die DE 41 20 128 A1 beschreibt eine Stelleinrichtung für eine trennbare Reibungskupplung eines Kraftfahrzeugs mit einem Elektromotor als Stellantrieb, dessen rotatorische Antriebsbewegung durch ein Bewegungsgetriebe in eine translatorische Stellgliedbewegung umgewandelt wird. Das beschriebene Bewegungsgetriebe ist kompliziert aufgebaut und dadurch teuer in der Herstellung.

Deshalb ist es Aufgabe der Erfindung, eine Stelleinrichtung für eine trennbare Reibungskupplung eines Kraftfahrzeugs bereitzustellen, die auf einfache Weise eine rotatorische Bewegung eines Antriebsteils zum Ein- und Ausrücken der Reibungskupplung in eine translatorische Bewegung eines Stellglieds umwandelt, welches auf eine an der Reibungskupplung angeordnete Ausrückeinrichtung einwirkt.

Die Aufgabe der Erfindung wird erfindungsgemäß mit den Merkmalen des kennzeichnenden Teils des Anspruchs 1 gelöst. Weitere Ausgestaltungen der Erfindung ergeben sich aus den Unteransprüchen.

Nach der Erfindung ist eine Stelleinrichtung für eine trennbare Reibungskupplung eines Kraftfahrzeugs mit einem Stellantrieb dadurch gekennzeichnet, daß Stellglied und Antriebsteil an Ihren zueinander gerichteten Umfangsflächen über eine Umfangsnut und einen in diese hineinragenden Vorsprung eine Formschlußverbindung bilden, die eine Rotationsbewegung des Antriebsteils in eine Translationsbewegung des Stellglieds wandelt und daß die Umfangsnut so gestaltet ist, daß sich, in Richtung der Translationsbewegung des Stellglieds gesehen, ihre Steigung so ändert, daß trotz einer nicht linearen Federkennlinie einer Kupplungsdruckfeder vom Antriebsteil zum Verschieben des Stellglieds eine im wesentlichen konstante Antriebskraft aufgebracht werden muß.

Das hat den Vorteil, daß die Rotationsbewegung des Antriebsteils auf sehr einfache Weise in eine Translationsbewegung des Stellglieds umgewandelt wird, was bewirkt, daß für das Bewegungsgetriebe wenig Bauteile notwendig sind.

Bei vorteilhaften Ausführungen der Erfindung ist entweder die Umfangsnut am Antriebsteil und der Vorsprung am Stellglied ausgebildet oder, gerade umgekehrt, die Umfangsnut am Stellglied und der Vorsprung am Antriebsteil.

Das hat den Vorteil, daß je nach Platzbedarf oder anderen Konstruktionskriterien das Bewegungsgetriebe verschieden ausgebildet werden kann, jedoch gleich wirkt.

Bei einer Stelleinrichtung, bei der die translatorische Bewegung durch die Steigung der Umfangsnut beeinflußt werden kann, ist es auf einfache Weise möglich, den Stellantrieb gleichmäßig zu beaufschlagen, auch wenn am Stellabtrieb während der translatorischen Bewegung der Kraftbedarf variiert. Für die Auslegung des Stellantriebs ist es von Vorteil, wenn dieser gleichmäßig belastet wird. Auf einfache Weise wird dies erreicht, indem die Umfangsnut eine Steigung besitzt, die der nicht linearen Federkennlinie der Kupplungsdruckfeder so angepaßt ist, daß zum Bewegen des Stellglieds immer eine im wesentlichen konstant bleibende Kraft notwendig ist.

Bei einer weiteren bevorzugten Ausführung der Erfindung wird das Antriebsteil durch einen Elektromotor angetrieben.

Gerade hier ist von Vorteil, wenn von diesem eine konstante Antriebskraft abverlangt wird. So kann dieser optimal ausgelegt werden.

Bei einer weiteren vorteilhaften Ausführung der Erfindung ist der Elektromotor außen an einem Gehäuse der Reibungskupplung angebracht und seine Antriebswelle ragt in das Gehäuse der Reibungskupplung hinein.

Das hat den Vorteil, daß das Bewegungsgetriebe der Stelleinrichtung komplett im Kupplungsgehäuse untergebracht ist. Es ist so für die Stelleinrichtung kein separates Gehäuse notwendig und außerhalb des Kupplungsgehäuses kann wartungsfreundlich der Elektromotor, der bereits ein Gehäuse besitzt, befestigt werden.

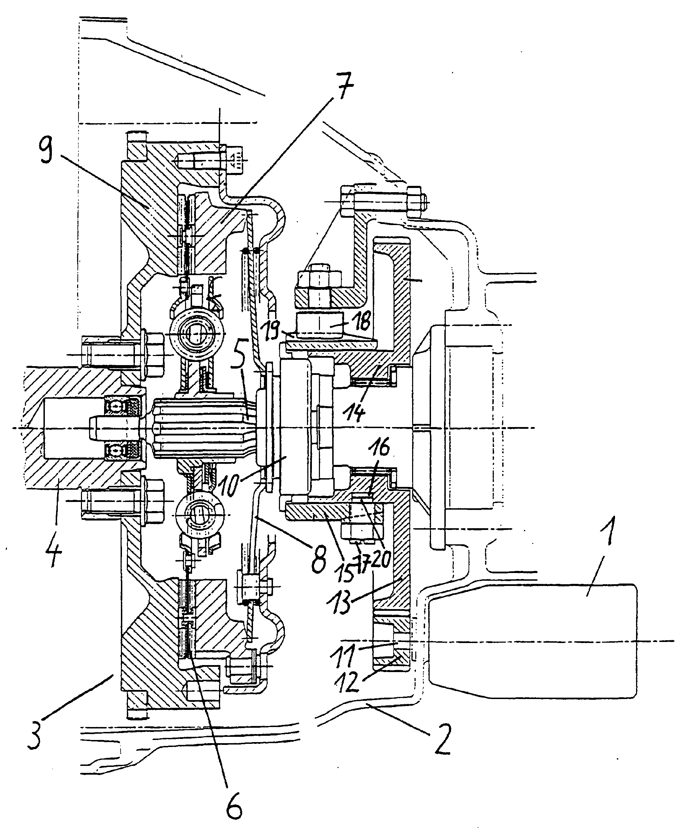

Ein bevorzugtes Ausführungsbeispiel der Erfindung ist in der nachfolgenden Beschreibung und der zugehörigen Zeichnung näher dargestellt. Die einzige Figur zeigt einen Teilquerschnitt durch ein Kupplungsgehäuse einer trennbaren Reibungskupplung eines Kraftfahrzeugs mit einer erfindungsgemäßen Stelleinrichtung.

Ein Elektromotor 1 ist mit nicht gezeichneten, für die Erfindung unwesentlichen, allgemein gebräuchlichen Befestigungsmitteln außen an einem Gehäuse 2 einer Reibungskupplung 3 eines Kraftfahrzeugs angebracht. Die Reibungskupplung 3 ist trennbar ausgebildet und verbindet im Antriebsstrang des Kraftfahrzeugs eine Kurbelwelle 4 mit einer Getriebeeingangswelle 5. Die trennbare Reibungskupplung 3 besteht aus einer Kupplungsscheibe 6, die mittels einer durch eine Tellerfeder 8 belasteten Druckplatte 7 an ein Schwungrad 9 so angepreßt wird, daß eine Reibschlußverbindung zwischen Kupplungsscheibe 6 und Schwungrad 9 entsteht. Der Antriebskraftfluß des an der Kurbelwelle 4 anliegenden Drehmoments wird dadurch über das Schwungrad 9 und die Kupplungsscheibe 6 zur Getriebeeingangswelle 5 geleitet. Unterbrochen wird dieser Kraftfluß durch Trennen der Reibungskupplung 3, indem die Druckplatte 7 von der Kraft der Tellerfeder 8 entlastet wird. Dies geschieht durch Verschieben der Tellerfeder 8 an deren Innendurchmesser in Richtung der Kurbelwelle 4. Dazu wird eine am Innendurchmesser der Tellerfeder 8 anliegende Ausrückeinrichtung 10 mit einer translatorischen Bewegung in Richtung der Kurbelwelle 4 beaufschlagt.

Diese translatorische Bewegung wird durch eine Stelleinrichtung für die trennbare Reibungskupplung 3 verursacht, die vom Elektromotor 1 angetrieben wird. Die Stelleinrichtung besteht aus dem Elektromotor 1, der mit seiner Abtriebswelle 11 in das Gehäuse 2 der Reibungskupplung 3 hineinragt. Auf dieser Abtriebswelle 11 sitzt ein Ritzel 12, das ein Antriebsteil, ausgebildet als Zahnrad 13, in rotatorische Bewegung zum Ein- und Ausrücken der Reibungskupplung 3 versetzt. Das Zahnrad 13 ist konzentrisch zum Antriebsstrang im Gehäuse 2 der Reibungskupplung 3 drehbar gelagert. Es besitzt eine Nabe 14 auf deren Außenumfang ein Stellglied, als Druckstück 15 ausgebildet, translatorisch verschiebbar gelagert ist. Zahnrad 13 und Druckstück 15 umgreifen einander konzentrisch und bilden an ihren zueinander gerichteten Umfangsflächen über eine Umfangsnut 16 in der Nabe 14 und einen in diese hineinragenden Vorsprung 20 des Druckstücks 15 eine Formschlußverbindung, die eine Rotationsbewegung des Zahnrads 13 in eine Translationsbewegung des Druckstücks 15 wandelt. Dazu ist die Umfangsnut 16, in Richtung der Translationsbewegung des Druckstücks 15 gesehen, so in die Nabe 14 eingebracht, daß sie sich auch in axialer Richtung des Antriebsstrangs erstreckt.

Wird nun das Zahnrad 13 durch das Ritzel 12 des Elektromotors 1 angetrieben, verdreht sich die Umfangsnut 16 und verschiebt damit das Druckstück 15 translatorisch in Richtung der Ausrückeinrichtung 10, weil dieses mit dem Vorsprung 20, hier als Gewindestift 17 ausgebildet, in die Umfangsnut 16 hineinragt. Der Betrag der Verschiebung entspricht der axialen Komponente der Umfangsnut 16. Eine solche translatorische Bewegung des Druckstücks 15 ist nur möglich, wenn dieses gegen Verdrehen gesichert, verschieblich auf dem Zahnrad 13 sitzt. Dazu ist am Gehäuse 2 ein weiterer Vorsprung 18 angebracht, der in eine weitere Nut 19 am Außenumfang des Druckstücks 15 hineinragt und dieses dadurch verdrehsicher festlegt.

Die translatorische Bewegung des Druckstücks 15 wird auf die am Innendurchmesser der Tellerfeder 8 anliegende Ausrückeinrichtung 10 übertragen, dadurch wird die Reibungskupplung 3 getrennt.

## Patentansprüche

1. Stelleinrichtung für eine trennbare Reibungskupplung (3) eines Kraftfahrzeugs mit einem Stellantrieb, mindestens bestehend aus einem eine rotatorische Bewegung ausführenden Antriebsteil (13) zum Ein- und Ausrücken der Reibungskupplung (3) mittels eines vom Antriebsteil (13) beaufschlagten, eine translatorische Bewegung ausführenden Stellglieds (15) welches auf eine an der Reibungskupplung (3) angeordnete Ausrückeinrichtung (10) einwirkt, wobei Stellglied (15) und Antriebsteil (13) einander konzentrisch umgreifen, **dadurch gekennzeichnet, daß** Stellglied (15) und Antriebsteil (13) an Ihren zueinander gerichteten Umfangsflächen über eine Umfangsnut (16) und einen in diese hinein ragenden Vorsprung (20) eine Formschlußverbindung bilden, die eine Rotationsbewegung des Antriebsteils in eine Translationsbewegung des Stellglieds wandelt und daß die Umfangsnut (16) so gestaltet ist, daß sich, in Richtung der Translationsbewegung des Stellglieds gesehen, ihre Steigung so ändert, daß trotz einer nicht linearen Federkennlinie einer Kupplungsdruckfeder vom Antriebsteil zum Verschieben des Stellglieds eine im wesentlichen konstante Antriebskraft aufgebracht werden muß.

2. Stelleinrichtung nach Anspruch 1, **dadurch gekennzeichnet, daß** die Umfangsnut (16) am Antriebsteil (13) und der Vorsprung (20) am Stellglied (15) ausgebildet ist.

3. Stelleinrichtung nach Anspruch 1, **dadurch gekennzeichnet, daß** die Umfangsnut (16) am Stellglied (15) und der Vorsprung (20) am Antriebsteil (13) ausgebildet ist.

4. Stelleinrichtung nach einem der Ansprüche 1 bis 3, **dadurch gekennzeichnet, daß** das Antriebsteil (13) durch einen Elektromotor (1) angetrieben wird.

5. Stelleinrichtung nach Anspruch 4, **dadurch gekennzeichnet, daß** der Elektromotor (1) außen an einem Gehäuse (2) der Reibungskupplung (3) angebracht ist und seine Abtriebswelle (11) in das Gehäuse (2) der Reibungskupplung (3) hineinragt.

## Claims

1. A device for operating a separable friction clutch (3) of a motor vehicle, the device comprising an actuator consisting at least of a rotatable drive part (13) for engaging and disengaging the friction clutch (3) via a modulator (15) acted upon by the drive part (13) and moving in translation and acting on a disengagement device (10) disposed on the friction clutch (3), wherein the modulator (15) and the drive part (13) centrically surround one another, **characterised in that** the facing peripheral surfaces of the modulator (15) and the drive part (13), via a peripheral groove (16) and a projection (20) extending into it, form a positive connection which converts rotation by the drive part into translatory motion of the modulator, and the peripheral groove (16) is shaped so that its gradient in the direction of translatory motion of the modulator alters so that even though the characteristic of a pressure clutch spring is non-linear, the force required from the drive part for moving the modulator is substantially constant.

2. A device according to claim 1, **characterised in that** the peripheral groove (16) is formed on the drive part (13) and the projection (20) is formed on the modulator (15).

3. A device according to claim 1, **characterised in that** the peripheral groove (16) is formed on the modulator (15) and the projection (20) is formed on the drive part (13).

4. A device according to any of claims 1 to 3, **characterised in that** the drive part (13) is driven by an electric motor (1).

5. A device according to claim 4, **characterised in that** the electric motor (1) is mounted on the outside of a casing (2) of the friction clutch (3) and its driven shaft (11) projects into the casing (2) of the friction clutch (3).

## Revendications

1. Dispositif de positionnement pour un embrayage à friction débrayable (3) d'un véhicule automobile, équipé d'un entraînement de positionnement composé d'au moins une partie d'entraînement (13) décrivant un mouvement de rotation et destiné à embrayer et débrayer l'embrayage à friction (3) au moyen d'un organe de positionnement (15) sollicité par la partie d'entraînement (13), qui décrit un mouvement de translation et qui agit sur un dispositif de débrayage (10) disposé sur l'embrayage à friction (3), l'organe de positionnement (15) et la partie d'entraînement (13) s'entourant concentriquement l'une l'autre,
**caractérisé en ce que**
l'organe de positionnement (15) et la partie d'entraînement (13) forment une liaison par complémentarité de forme au niveau de leurs surfaces périphériques dirigées l'une vers l'autre, au moyen d'une gorge périphérique (16) et d'une saillie (20) engagée dans cette gorge, liaison qui convertit un mouvement de rotation de la partie d'entraînement en un mouvement de translation de l'organe de positionnement et la gorge périphérique (16) est conformée de manière que, vu dans la direction du mouvement de translation de l'organe de positionnement, sa pente varie de telle manière qu'en dépit d'une caractéristique élastique non linéaire d'un ressort de pression de l'embrayage, la partie d'entraînement ait à développer une force d'entraînement sensiblement constante pour déplacer l'organe de positionnement.

2. Dispositif de positionnement selon la revendication 1,
**caractérisé en ce que**
la gorge périphérique (16) est formée sur la partie d'entraînement (13) et la saillie (20) sur l'organe de positionnement (15).

3. Dispositif de positionnement selon la revendication 1,
**caractérisé en ce que**
la gorge périphérique (16) est formée sur l'organe de positionnement (15) et la saillie (20) sur la partie d'entraînement (13).

4. Dispositif de positionnement selon une des revendications 1 à 3,
**caractérisé en ce que**
la partie d'entraînement (13) est entraînée par un moteur électrique (1).

5. Dispositif de positionnement selon la revendication 4,
**caractérisé en ce que**
le moteur électrique (1) est monté extérieurement sur un carter (2) de l'embrayage à friction (3) et son arbre de sortie (11) est engagé dans le carter (2) de l'embrayage à friction (3).
